# EUROPEAN PATENT APPLICATION

(11) **EP 2 669 336 A1**
(43) Date of publication of application: **04.12.2013**
(21) Application number: 12739964.0
(22) Date of filing: 17.01.2012
(51) Int. Cl.: C08L 101/00, B29C 45/14

(54) **MOLD STRUCTURE AND MOTOR**

(30) Priority: 25.01.2011 JP 2011012602
(71) Applicant: Panasonic Corporation, Osaka 571-8501 (JP)
(72) Inventor: MORITA, Masanori, Chuo-ku Osaka 540-6207 (JP); KONDO, Kenji, Chuo-ku Osaka 540-6207 (JP); KUROZUMI, Seiji, Chuo-ku Osaka 540-6207 (JP)
(74) Representative: Schwabe - Sandmair - Marx
(86) International application number: PCT/JP2012/000226
(87) International publication number: WO 2012/101977

(57) **Abstract**

A mold structure according to the present invention is formed from a molding resin including at least a thermosetting resin, an electrically insulating inorganic filler containing at least a metal hydrate, and a dispersant. Thus, it is possible to improve the dispersibility of the inorganic filler in the molding resin, and increase the filling property and fluidity of the inorganic filler. As a result, the molding resin which has a high thermal conductivity and excellent moldability can achieve a mold structure with high radiation performance.

## Description

### TECHNICAL FIELD

The present invention relates to a mold structure obtained by mold forming of a magnet coil wound on an iron core, and a motor.

### BACKGROUND ART

Conventionally, the reduction in size, the reduction in thickness, and the increase in output power have been strongly desired for appliances such as motors for household electrical appliances and transformers. In addition, the appliances have been required to be low-noise and low-vibration appliances, in consideration of the environment for the usage of the appliances.

In order to meet the requirement, a low-noise and low-vibration motor has been proposed which is obtained by mold forming of a magnet coil wound on an iron core with the use of a molding resin. It is to be noted that the configuration of the motor will be described in detail in a subsequent exemplary embodiment.

However, in recent years, due to rising of environmental awareness in the market, there have been increasing demand for not only the reduction in size and thickness and an increase in output power density for motors, but also safety and low environmental burdens. Therefore, mold structures constituting stator 1 of a motor, for example have been required to have high heat radiation performance for suppressing the increase in temperature while achieving the reduction in size.

In addition, in order to ensure the safety of motors, the molding resins have been required to achieve a balance between high withstand voltage and flame retardancy. However, flame retardants compounded in conventional molding resins use bromine with high burdens on the environment. Therefore, flame retardants with reduced burdens on the environment have been required.

Therefore, in order to respond to the requirement, for example, the following studies described in Patent Literature 1 to Patent Literature 4 have been carried out.

The invention disclosed in Patent Literature 1 achieves increased thermal conductivity of a molding resin by an unsaturated polyester resin containing therein 65% to 80% of hard-burned magnesia that is a filler with a high thermal conductivity. However, the molding resin has no flame retardancy, and thus has difficulty in ensuring the flame retardancy required for molding resins of motors for household electrical appliances, transformers, and the like. In addition, because of highly filling with the filler, the resin component in the molding resin is relatively insufficient, so that the molding resin fails to achieve uniform dispersion of the filler.

Furthermore, the invention disclosed in Patent Literature 2 achieves highly increased thermal conductivity and improved flame retardancy of a molding resin by an unsaturated polyester resin containing therein alumina that has a thermal conductivity and red phosphorus that provides flame retardancy. However, when the molding resin is subjected to molding, there is a possibility that the insulation resistance of a stator will be decreased by mold corrosion caused by bleed out generated due to red phosphorus, and by deposition of the phosphorus on the surface under hot and humid usage environment. In addition, the phosphorus contained in the molding resin has the possibility of failing to be admitted for use in environment-conscious products.

Furthermore, the invention disclosed in Patent Literature 3 achieves highly increased thermal conductivity of a molding resin by the molding resin containing a metal powder in an epoxy resin and a filler. However, because of the high viscosity of the epoxy resin itself, the filler is not able to be dispersed uniformly. Thus, the filler is dispersed uniformly by restricting the molecular weight of the epoxy resin or putting a limit on the kneading method. Therefore, there are problems such as longer production tact time (cycle time). In addition, the conductive metal powder may be incorporated between the winding wires in the mold forming of the magnet coil wound on the iron core in some cases. If there are any pinholes in the film of the winding wire near the metal powder, then the withstand voltage of the mold structure will be decreased. Furthermore, because the molding resin is filled with the metal powder, there are problems such as that the mold is damaged by the metal powder in a short period of time in the mold forming.

In addition, the invention disclosed in Patent Literature 4 achieves increased thermal conductivity of prepreg by a molding resin of an epoxy resin highly filled with an inorganic filler as a filler with the addition of a moist dispersant to the epoxy resin. However, as in Patent Literature 2, because of the high viscosity of the epoxy resin itself, the filler is not able to be dispersed uniformly. In addition, the resin for prepreg has too low fluidity for mold forming of magnet coils for motors, and thus has the problem of being unable to prepare mold structures.

### Citation List

### Patent Literatures

PTL 1: Japanese Patent No. 3622724
PTL 2: Japanese Patent No. 4186930
PTL 3: Unexamined Japanese Patent Publication No. 2004-143368
PTL 4: Unexamined Japanese Patent Publication No. 2010-260990

### SUMMARY OF THE INVENTION

In order to solve the problems mentioned above, a mold structure according to the present invention is formed from a molding resin including at least a thermosetting resin, an electrically insulating inorganic filler containing at least a metal hydrate, and a dispersant.

Thus, it is possible to improve the dispersibility of the inorganic filler in the molding resin, and provide the high filling property and fluidity of the inorganic filler. Moreover, the metal hydrate containing no substances with high environmental burdens, such as phosphorus flame retardants, can improve the flame retardancy of the molding resin. As a result, the molding resin which has a high thermal conductivity and flame retardancy and has excellent moldability can achieve a mold structure with high heat radiation performance and high reliability.

### BRIEF DESCRIPTION OF DRAWINGS

FIG. 1 is a cross-sectional view illustrating the configuration of a motor according to an exemplary embodiment of the present invention.
FIG. 2 is a diagram showing the relationship between the winding wire temperature and the thermal conductivity of a molding resin in the motor according to the exemplary embodiment.

### DESCRIPTION OF EMBODIMENTS

A mold structure and a motor using the mold structure according to an exemplary embodiment of the present invention will be described below with reference to the drawings. It is to be noted that the present invention is not limited by the embodiment.

### EXEMPLARY EMBODIMENTS

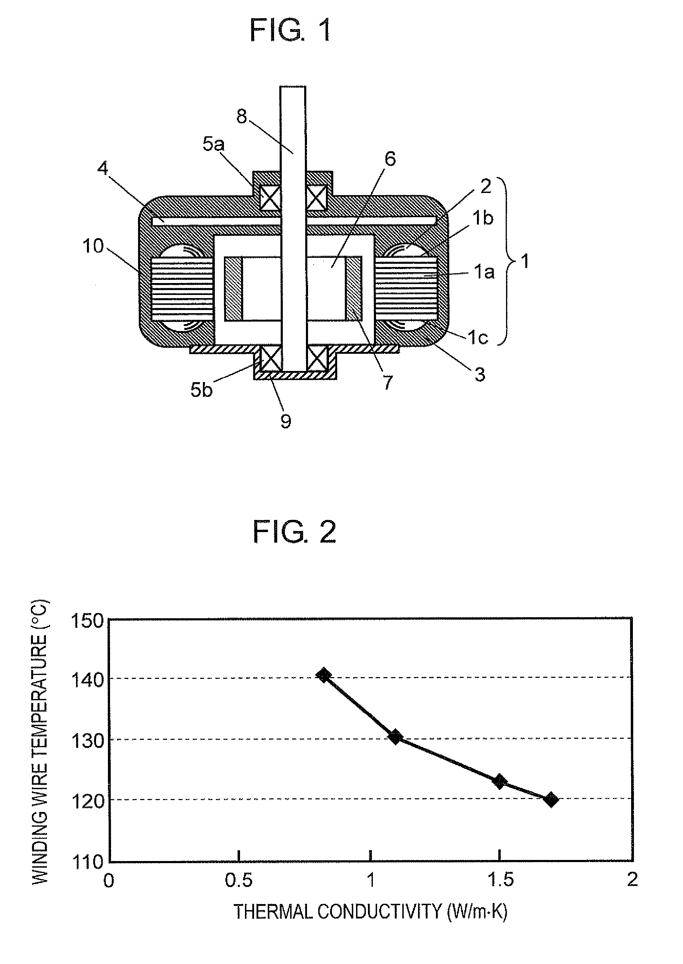

The mold structure according to the exemplary embodiment of the present invention will be described below with reference to FIG. 1. It is to be noted that a motor for household electrical appliances, such as, for example, a small-size air-conditioning motor, which is formed from a mold structure obtained by mold forming of a magnet coil wound on an iron core with a molding resin, will be described as an example with reference to FIG. 1.

FIG. 1 is a cross-sectional view illustrating the configuration of the motor according to the exemplary embodiment of the present invention.

As shown in FIG. 1, the motor is composed of stator 1, driving circuit 4, and rotor 6 that has an outer periphery with permanent magnet 7. Stator 1 of the motor is composed of winding wire 2 wound on iron core 1a with a winding frame interposed therebetween, and integrally formed so as to be surrounded by mold structure 3 of a molding resin, excluding the inner periphery of iron core 1a. In this case, on one end surface 1b of stator 1, a bearing housing for housing bearing 5a for supporting rotor 6 is integrally formed with mold structure 3 of the molding resin, and other end surface 1c of the stator is provided with an opening. Driving circuit 4 is placed between winding wire 2 and bearing 5a, and integrally formed along with stator 1 so as to be surrounded by mold structure 3 of the molding resin.

In addition, rotor 6 has shaft 8 with one end inserted from the opening of stator 1 into bearing 5a, then the other end inserted into bearing 5b housed in a bearing housing section formed for bracket 9 including the bearing housing section. Further, other end surface 1c of stator 1 is covered by bracket 9, so that shaft 8 of rotor 6 is rotatably supported in stator 1 via bearings 5a and 5b.

With the configuration described above, the vibration generated by iron core 1a and winding wire 2 with rotation of the rotor is suppressed by mold structure 3 constituting stator 1 to achieve a motor which is less likely to vibrate and highly silent.

Furthermore, molding resin constituting mold structure 3 according to the present exemplary embodiment is composed of: a thermosetting resin of, for example, an unsaturated polyester; an insulating inorganic filler of at least a metal hydrate such as, for example, aluminum hydroxide; and a dispersant such as a moist dispersant.

In this case, as described in detail below, the content of the dispersant is preferably 0.5% to 2% with respect to the weight of the inorganic filler. In addition, the content of the inorganic filler is preferably twice or more than that of the resin such as the thermosetting resin in the molding resin.

In addition, the unsaturated polyester resin as the thermosetting resin preferably has a viscosity on the order of 300 mPa·s. Thus, the inorganic filler, a glass fiber, and the like can be easily dispersed uniformly by a common kneading machine (the blade shape is, for example, dualarmed, sigma-form, z-form, or the like).

It is to be noted that when an epoxy resin with a viscosity of 3000 mPa·s is used as the thermosetting resin, it is difficult to uniformly disperse and knead the inorganic filler and the glass fiber. If the molding resin such as the epoxy resin is kneaded for a longer period of time, the molding resin will start curing by friction heat, thus making the molding resin unlikely to be incorporated between the winding wires during the mold forming. Therefore, even in the case of using a molding resin composed of an epoxy resin with a high thermal conductivity, the suppression of increase in magnet coil temperature or the vibration-proofing property will be decreased as a mold structure.

Thus, a mold structure can be achieved which has a thermal conductivity of 1.5 W/m·K or more and flame retardancy of UL standard 94 V-0 (1/16 inch thick) (hereinafter, referred to as "V-0"). More specifically, the use of molding resin can reduce thinnest section 10 of the mold structure in the motor shown in FIG. 1 in thickness, for example, to 1.6 mm, by on the order of 20% as compared with conventional resins. As s result, the reduction in motor size and the flame retardancy V-0 can be both achieved.

In addition, the molding resin is composed of only the thermosetting resin and the insulating inorganic filler. Therefore, even when winding wire 2 has film defects (initial pinholes and winding scratches), the withstand voltage between winding wires 2 can be prevented from being decreased in the mold forming. As a result, the withstand voltage can be prevented from being decreased over the entire mold structure constituting the motor.

Properties of the molding resin constituting the mold structure according to the present exemplary embodiment will be described in detail below.

First, (Table 1) below shows the relationship of the resin amount, the resin moldability, and the thermal conductivity of the molding resin or mold structure, with the added amount of the moist dispersant. In (Table 1), the added amount of the moist dispersant is represented as the ratio (%) of the added amount of the moist dispersant to the inorganic filler. It is to be noted that the resin amount refers to, for example, the amount of an unsaturated polyester resin as the thermosetting resin kneaded into the molding resin (100%). In addition, although not shown in (Table 1), the rest obtained by subtracting the resin amount and moist dispersant from the molding resin corresponds to the amount of the inorganic filler. In addition, the mark (-) shown in (Table 1) indicates that the thermal conductivity was not measured, and the same applies to subsequent tables. In addition, the thermal conductivity shown hereinafter is represented as the value measured with the use of LFA 447 NanoFlash (xenon flash analyzer) apparatus from NETZSCH.

**[Table 1]**

| | | | | | |
|---|---|---|---|---|---|
| Resin Amount (%) | 21 | 20 | 19 | 17 | 16 |
| Ratio (%) of Added Amount of Moist Dispersant to Inorganic Filler (%) | 0 | 0 | 1 | 1 | 1 |
| Moldability | ○ | × | ○ | ○ | × |
| Thermal Conductivity (W/m·K) | 1.1 | - | 1.6 | 1.7 | - |

As shown in (Table 1), in the case of no moist dispersant added, the resin amount of 20% or less decreases kneadability to make it impossible to form any mold structures.

However, even in the case of the resin amount of 19% or less, the addition of the moist dispersant on the order of 1% to the inorganic filler makes it possible to form mold structures up to the resin amount of 17%.

More specifically, the addition of the moist dispersant can form mold structures, even when the inorganic filler is increased in amount whereas the resin amount is reduced. As a result, molding resins and mold structures can be achieved which have a high thermal conductivity of 1.6 W/m·K or more.

Further, the thermosetting resin may contain therein, in order to improve the dimensional stability, a resin that has the action of relaxing shrinkage of the molding resin, such as, for example, polystyrene and thermoplastic polyethylene. In that case, the total of the thermosetting resin and low shrinkage agent corresponds to the resin amount in (Table 1).

Next, (Table 2) shows the relationship between the added amount of the moist dispersant to the inorganic filler, and the moldability of the molding resin and the thermal conductivity of the mold structure.

**[Table 2]**

| | | | | | |
|---|---|---|---|---|---|
| Ratio (%) of Added Amount of Moist Dispersant to Inorganic Filler (%) | 0 | 0.5 | 1.0 | 2.0 | 3.0 |
| Moldability | × | Δ | ○ | ○ | ○ |
| Thermal Conductivity (W/m·K) | - | 1.6 | 1.6 | 1.5 | 1.3 |

As shown in (Table 2), in the case of no moist dispersant added, no mold structure can be formed because of the poor kneadability of the molding resin. On the other hand, when the added amount of the moist dispersant to the inorganic filler is 3% or more, the mold structure undergoes a decrease in thermal conductivity, without the effect of improving the thermal conductivity.

More specifically, the added amount of the moist dispersant preferably ranges from 0.5% to 2% with respect to the inorganic filler. As a result, molding resins and mold structures can be achieved which have a high thermal conductivity.

In this case, the inorganic filler may be subjected to a surface treatment with the use of, for example, a silane coupling agent. Thus, molding resins and mold structures with a high thermal conductivity are obtained by increasing the dispersibility of the inorganic filler in the molding resin and improving the adhesion between the resin and the inorganic filler.

Next, (Table 3) below shows the relationship between flame retardancy and the ratio between the resin amount of the unsaturated polyester resin in the molding resin and the content of metal hydrate as the inorganic filler in the molding resin.

In (Table 3), flame retardancy is evaluated based on UL94 V-0, V-1, and V-2 standards in an UL burn test method, with the use of sample A, sample B, and sample C of 1.6 mm thick (1/16 inch) that are different in the ratio between the resin amount and the metal hydrate in the molding resin.

It is to be noted that while aluminum hydroxide as an example is described as the metal hydrate for providing flame retardancy with reference to (Table 3), the metal hydrate is not limited to this aluminum hydroxide. Further, while calcium carbonate as an example is described as the inorganic filler other than the metal hydrate with reference to (Table 3), the inorganic filler is not limited to this calcium carbonate.

**[Table 3]**

| | Sample A | Sample B | Sample C |
|---|---|---|---|
| Resin Amount | 21% | 21% | 21% |
| Metal Hydrate (Aluminum Hydroxide) | 35% | 42% | 70% |
| Calcium Carbonate | 35% | 28% | 0% |
| Others (Curing Agent, Lubricant, etc.) | 9% | 9% | 9% |
| Flame Retardancy (UL94 1/16 inch) | V - 2 | V - 0 | V - 0 |

As shown in (Table 3), flame retardancy of V-2 is indicated in the case of sample A in which the ratio of the metal hydrate is less than twice as high as the resin amount. On the other hand, it is found that high flame retardancy of V-0 is achieved in the case of sample B in which the ratio of the metal hydrate is twice as high as the resin amount and sample C in which the ratio is more than twice as high as the resin amount. More specifically, it is found that the metal hydrate absorbs heat of combustion by decomposition water produced on heating, thereby providing flame retardancy to the molding resin, and can provide higher flame retardancy when the ratio of the metal hydrate is twice or more than the resin amount.

It is to be noted that magnesium hydroxide may be used besides aluminum hydroxide, as a metal hydrate that exhibits flame retardancy at 400°C or lower.

In addition, the unsaturated polyethylene as the thermosetting resin may contain therein a low shrinkage agent composed of a thermoplastic resin such as, for example, polystyrene or thermoplastic polyethylene, in order to improve the dimensional stability. In that case, the total of the thermosetting resin and low shrinkage agent corresponds to the resin amount in (Table 3).

Therefore, the use of the metal hydrate as a flame retardant can achieve molding resins and mold structures provided with flame retardancy of V-0. Therefore, there is no need to use any flame retardant containing halogen, phosphorus, and the like, which are limited on the use thereof from the standpoint of environmental burden.

It is to be noted that the effect of the metal hydrate on the resin amount of 21% shown in (Table 1) has been described as an example with reference to (Table 3), the effect is not limited to this resin amount. In the case of the moist dispersant added in (Table 1), a similar effect is achieved when the metal hydrate is added in an amount twice or more as much as the resin amount from 17% to 19%.

The heat radiation performance of the molding resin constituting the mold structure formed as described above will be described below with reference to FIG. 2. It is to be noted that a small-size air-conditioning motor formed with a mold structure composed of the molding resin described above will be described as an example with reference to FIG. 2.

FIG. 2 is a diagram showing the relationship between the winding wire temperature and the thermal conductivity of the mold structure in the motor according to the exemplary embodiment of the present invention.

As shown in FIG. 2, when the thermal conductivity of the mold structure is 1.7, the increase in winding wire temperature can be suppressed to on the order of 120°C. On the other hand, when the thermal conductivity of the mold structure is 0.75, the temperature of the winding wire is increased to 140°C. Therefore, the improved thermal conductivity can provide a margin of, for example, 20°C for the increase in wiring wire temperature in the motor.

More specifically, it is found that heat generated by the winding wire can be more efficiently released to the outside by increasing the thermal conductivity of the molding resin constituting the mold structure, with the predetermined compounding ratio described with reference to (Table 1) to (Table 3).

According to the present exemplary embodiment, the increase in winding wire temperature and the increase in temperature in respective sections of the motor can be reduced by the mold structure with a high thermal conductivity. As a result, electronic components, and the like constituting driving circuit 4 can be improved in endurance to make improvements in reliability and safety for appliances such as motors.

It is to be noted that the unsaturated polyester as an example has been described as the thermosetting resin in the present exemplary embodiment, the thermosetting resin is not limited to this unsaturated polyester. The thermosetting resin may be, for example, an epoxy-modified polyester resin. This resin achieves a similar effect.

Further, while the calcium carbonate as an example has been described as the inorganic filler other than the metal hydrate in the present exemplary embodiment, the inorganic filler is not limited to this calcium carbonate. The inorganic filler may be, for example, talc. This inorganic filler achieves a similar effect.

Further, while the silane coupling agent as an example has been described as an agent for the surface treatment of the inorganic filler in the present exemplary embodiment, the agent is not limited to this silane coupling agent. The agent may be, for example, a titanate or aluminate coupling agent. This agent achieves a similar effect.

The mold structure according to the present invention is formed from the molding resin including at least the thermosetting resin, the electrically insulating inorganic filler containing at least the metal hydrate, and the dispersant. Thus, it is possible to improve the dispersibility of the inorganic filler in the molding resin, and increase the filling property and fluidity of the inorganic filler. As a result, the molding resin which has a high thermal conductivity and excellent moldability can achieve a mold structure with high heat radiation performance. Furthermore, the high fluidity of the molding resin causes the molding resin to flow into small gaps between magnet coils during molding, and closely attach to the surfaces of the magnet coils. As a result, the radiation performance of the magnet coils can be improved.

Furthermore, according to the present invention, the dispersant is a moist dispersant. Thus, the dispersibility of the inorganic filler in the molding resin can be improved.

Furthermore, in the mold structure according to the present invention, the added amount of the moist dispersant ranges from 0.5% to 2% with respect to the weight of the inorganic filler. Thus, the fluidity and radiation performance of the molding resin can be further optimized.

In addition, according to the present invention, the content of the inorganic filler is twice or more than the total content of the resin in the molding resin. Thus, the flame retardancy of the molding resin can be improved without containing any substances with high environmental burdens.

Furthermore, in the mold structure according to the present invention, the thermosetting resin is unsaturated polyester. Thus, the thermal conductivity of the molding resin can be improved, and the inorganic filler can be sufficiently kneaded.

Furthermore, in the mold structure according to the present invention, the molding resin contains a silane coupling agent in addition to the moist dispersant. Thus, the dispersibility of the inorganic filler can be further increased.

Furthermore, a motor according to the present invention includes a mold structure obtained by mold forming of a magnet coil wound on at least an iron core with the molding resin described above. Thus, a safe, high-power small-size thin motor can be achieved which has high flame retardancy.

### INDUSTRIAL APPLICABILITY

The present invention is useful in the field of mold structures formed from a molding resin that requires high safety and reliability, and in technical fields such as, in particular, a motor that uses a mold structure and desires the reduction in size and the increase in output power.

### REFERENCE MARKS IN THE DRAWINGS

- 1: stator
- 1a: iron core
- 1b, 1c: end surface
- 2: winding wire
- 3: mold structure
- 4: driving circuit
- 5a, 5b: bearing
- 6: rotor
- 7: permanent magnet
- 8: shaft
- 9: bracket
- 10: thinnest section

## Claims

1. A mold structure formed from a molding resin,
the molding resin including:
at least a thermosetting resin;
an electrically insulating inorganic filler containing at least a metal hydrate; and
a dispersant.

2. The mold structure according to claim 1,
wherein the dispersant is a moist dispersant.

3. The mold structure according to claim 2,
wherein an added amount of the moist dispersant ranges from 0.5% to 2% with respect to weight of the inorganic filler.

4. The mold structure according to claim 1,
wherein a content of the inorganic filler is twice or more than a total content of the molding resin.

5. The mold structure according to claim 1,
wherein the thermosetting resin is unsaturated polyester.

6. The mold structure according to claim 2,
wherein the molding resin contains a silane coupling agent in addition to the moist dispersant.

7. A motor comprising a mold structure obtained by mold forming of a magnet coil wound on at least an iron core with the molding resin according to any one of claims 1 to 6.
